(19) Europäisches Patentamt

European Patent Office

Office européen des brevets

(11) **EP 2 985 749 A2**

(12) **EUROPEAN PATENT APPLICATION**
published in accordance with Art. 153(4) EPC

(43) Date of publication:
**17.02.2016 Bulletin 2016/07**

(21) Application number: **14724783.7**

(22) Date of filing: **10.04.2014**

(51) Int Cl.:
*G09C 1/00* (2006.01)    *H05K 1/02* (2006.01)
*H04L 9/30* (2006.01)

(86) International application number:
**PCT/ES2014/070287**

(87) International publication number:
**WO 2014/167161 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.04.2013 ES 201330513**

(71) Applicant: **Elatentia, S.L.**
**28018 Madrid (ES)**

(72) Inventor: **ANTEQUERA RODRÍGUEZ, Nicolás**
**E-28903 Getafe (Madrid) (ES)**

(74) Representative: **Capitán García, Maria Nuria**
**Felipe IV no. 10, bajo iz.**
**28014 Madrid (ES)**

(54) **SYMMETRIC ENCRYPTION DEVICE, AND METHOD USED**

(57)    Symmetric encryption device that allows the protection of information between two extremes, either in Unicast mode, comprising: A central microprocessor (1), two RJ45 connectors (2) and (3), an anti-opening module (4), which can be disabled for a specific time through software, and which allows to eliminate information contained in the microprocessor or its destruction, based on switches, diodes, or motion sensors, external communication ports (5), (Bluetooth, USB, RF) and a 9V battery (6) that feeds the anti-opening system and the microprocessor, is used in Unicast communication in the Internet, in a LAN environment, in a Multicast communication, in a bridge mode configuration. The encryption process allows it to act as key server, allow/dismiss new users, certify that the member who sent the keys is the key server, and authentication between users.

FIG.1

**Description**

**OBJECT OF THE INVENTION**

The subject of the present invention is a device that allows symmetric encryption to protect information, either between two extremes, Unicast mode or if appropriate, between an unlimited group of users, Multicast mode. Such a device is connected to a computer via a RJ45 connector, the encryption device sends the information already protected through a second RJ45 connector. The device uses a key exchange algorithm based on the calculation of the modular inverse of an integer and contains a radio frequency module that communicates with another device comprised by a keyboard that can optionally include an LCD that allows users to enter sensitive data independently from the computer. In turn, the encryption device through the radio frequency can interact with the sensitive data input device by sending sensitive information to the display for the user. Finally, the encryption device can use the radio frequency system to communicate with other mobile devices, usually mobile phones.

**BACKGROUND OF THE INVENTION**

Various types of information encryption devices are known on the current state of the art, almost all of them based on communications only between a transmitter and a receiver. Thus, document ES 2245305 is known, which describes a system of public key encryption, which uses a public key /private key pair as well as a method and a device for increasing the security of authentication by employing a biometric authentication system more resilient to tampering and characterized by generating a public key/private key pair from a biometric registration, using the private key after the previous biometric authentication. In this encryption system the encryption process claim is not included in any of the ways referred to, either Unicast or Multicast, although the reliability of the private key is included, after biometric authentication.

The ES 2094135 document is focused on a communication network with key distribution on a subscriber network analogical architecture, although it also mentions digital communications. The system consists of several devices, an encryption unit that gets encryption codes from a code distribution authority and a management element for the assignment of such encryption codes, also mentioning that the code assignment management module can be connected to an authentication server to manage a list of certificates. In this case, the document does not include a single security element, either for an entire local network, either for virtually connected local networks, or if necessary, for Multicast networks.

The ES 2130570 document mentions a system and device for encryption/decryption of data blocks. The system uses the method called Cipher Block Chain (CBC) and which device is linked to a block-based algorithm, XOR operations and use of shift registers. In this case, again, there is no reference to any encryption in Multicast environments or a device specifically designed to encrypt simultaneously in both scenarios, Unicast and Multicast and that distributes a symmetric key to an entire group of users by calculating the modular inverse of an integer. Neither has it referred to any special protection mechanisms for the device such as anti-opening, anti-displacement mechanisms, etc.

The ES 2158081 document refers to a cryptographic system and method with key escrow feature and more specifically to the generation, certification, storage and secure distribution of cryptographic keys used in cryptographic communication systems and more particularly, the document refers to a storage management system of cryptographic keys and public key certificates executed by a self-certification chip device. Obviously there is no relation with the invention described herein.

The ES 2221932 document, describes a cryptographic device with dual feed forward function, i.e. it refers to cryptographic devices, and more particularly to a cryptographic processor using a dual feed forward arrangement to implement an encryption algorithm having an additional property, such that the investment at the input of the cryptographic processor can be detected at its output. Clearly the invention reflected in the ES 2221932 document does not relate to the device and method described in this invention.

The ES 2262210 document covers a system for the secure transmission of data signals, more specifically, a system comprising means for encrypting data signals using a first key, means for transmitting the encrypted data signals to subscribers, means to decrypt the encrypted data signals in each of the subscribers using the first key, means for encrypting the first key using a second key, such second key would be different for each group of subscribers who have a common interest in a type of programs, means for transmitting the encrypted first key to all subscribers, means for decrypting the encrypted first key at each of the subscribers using the second key. In this case we can see that a Multicast scenario is covered where there is a second key for each subscriber group. Obviously, the bandwidth efficiency of this system is better than a Unicast oriented system but security is very low because the key cannot be recalculated immediately after the addition or removal of members of each group. Moreover, authentication mechanisms are not used as the ones used in the central device of the current patent.

The ES 2274557 document, system for providing encrypted data, system to decrypt encrypted data system and method for providing a communications interface to said decryption system mentions a system to protect information for content players containing in turn a decryption system also covered in the patent. In our case, the device is an encryption/decryption generic and symmetric device with symmetric key calculation and distribution used to encrypt any content from a computer and broadcast it on a Unicast or Multicast scenario and where there are secure authentication mechanisms of the different members of the group, either Unicast or Multicast.

Thus, none of the documents found in the present state of the art discloses a system like that of the invention, comprising an encryption device, calculation and distribution of the symmetric key, simultaneously oriented to Unicast and Multicast environments, formed by an anti-tampering protection element that includes various sensors for detecting unauthorized opening and transfer, which contains a method of analysis of information from the computer and having several standard and own encryption methods.

## DESCRIPTION OF THE INVENTION

The subject of the present invention a system for encryption/decryption of information that allows working in two modes: Unicast or Multicast.

This encryption system comprises a valid symmetric encryption device for Unicast and Multicast environments, and which has two RJ45 connectors, at least two USB connectors, at least one Bluetooth device and at least one wireless device. The device also has a radio frequency module comprising 433MHz, 860MHz, 2.4GHz and 5GHz ISM bands depending on configuration. The encryption device is covered by a metal casing which has strategically placed bolts pressing switches placed in the device electronic circuit. These switches allow detecting an attempt of unauthorized opening. It also contains some IR diodes that detect any opening of the device cover.

The encryption device is connected to the computer via one of the RJ45 connectors. The other device RJ45 connector is connected to the data network, either an intranet or directly to a router for internet access.

After connecting the device, the data coming from the computer through the Ethernet connector, are interpreted by the encryption device and, if necessary, the data is encrypted and are forwarded by through the device Ethernet output port of to local network or Internet.

Being a symmetric encryption device, it is clear that the information submitted will be decrypted by an identical unit in the destination and connected equally to the end computer.

It is also possible to connect this encryption device as a separate element of a local network is also possible and is able to encrypt and decrypt all incoming and outgoing information on the local network.

The device has two RJ45 connectors that can correspond to two different IPv4 addresses or, if applicable, the device can have a single IPv4 address. In the first case, the device encrypts the information obtained from the computer, acting as its "gateway"; it encrypts it and then forwards it through the second IPv4 address. In the second case, the device obtains the information from the computer; it encrypts it and forwards it through the second connector, being able to use in this case, the same IPv4 address than the computer since it acts as a bridge between the computer and the outside network.

For Unicast environments the device can encrypt in a standard way using a standard symmetric algorithm, for example AES and using a signature algorithm based in calculation of modular inverse of an integer. For Multicast environments, the device can act as both the key and/or service server, or as Multicast encrypted information receiving node using the algorithm based in the calculation of inverse explained in subsequent paragraphs.

In a more detailed description, the device contains an electronic board consisting of a microprocessor as the central computing element.

The anti-opening mechanism locks the device thereby disabling its use. For that purpose, it has a 9-volt battery that powers the anti-opening system at all times and is able to eliminate information contained in the microprocessor, additional memories, or even the destruction of these elements, as appropriate, as well as the encryption keys. The anti-opening mechanism is formed by a series of strategically placed IR diodes capable of detecting light changes compatible with the opening process, the signal being saturated in the case that the mentioned opening occurs. There is also an additional module with a motion and acceleration sensor to avoid removal of the device without prior permission. This module, after the aforementioned, can be disabled for a specific time via software. Not so the light detection mechanism. The device electronic board has four buttons which are activated by the metal housing. When being removed by unauthorized personnel, as soon as one of the buttons is open, it will be detected by the central microprocessor and the device will be made void.

In Multicast mode, the device acting as a key and information server, the group customers/users of the Multicast group may also share information with each other and authenticate either against the server or between themselves. All this without consuming a high bandwidth, thus, the system is suitable for any computing environment, from those microcontrollers with low computing resources to the most powerful computers available.

Thus the device is able to encrypt the information from a computer or even an indeterminate group of computers and return that information to each of those computers to be sent by email or stored where required.

A single device as the one mentioned above allows encrypt/decrypt messages within an intranet. If you want for certain information to flow between different intranets or corporations, even in a different geographical area, the other end must have a device with similar characteristics. The secret information will be adapted so that the external device can decode the source information.

The encryption device can also obtain sensitive data from a remote computer located anywhere in the world and connected to the Internet. This can be used, for example, for banking or for those in which it is necessary to enter some information and ensure that such information will not be obtained through any virus on the remote computer or other type of attack that seeks sensitive information related to such banking transaction or any other transaction entered on the remote computer. Thus, the device consists of a keyboard plus a LCD display as user interfaces; it can be connected through a USB port or Bluetooth. This keyboard + LCD device allows the encryption of information using the symmetric encryption algorithm, calculating previously the symmetric key sent by the server device via private key integer $x_i$, possessing the keypad device + LCD also previously distributed by the key server. This information is sent through the user's computer to the encryption device, which also acts as a key server, located in a data centre, for example. Any sensitive information that the user needs to enter into their computer will be typed using the keyboard provided for it and displayed on the LCD display in real time. The device keyboard + LCD send this sensitive information besides any other information necessary to the encryption device located elsewhere on the Internet. In this way, any operation that needs data entry such as bank accounts, etc. will be protected and sent to the encryption device.

For Multicast environments and optionally in Unicast mode requiring protection of information in real time, the following algorithmic processes are carried out.

The process of Multicast data protection used by the device (although it is also valid for a Unicast environment) for a group of users is as follows.The information sent to corresponding to the session key, which the other members of the system have to recover, does not require the use of complex calculations but uses the modular inverse of an integer, both to develop the information to be sent and for each user (with a device such as the present invention or via an appropriate software) to recover the original information behind this information being sent.

The algorithm used here allows a group of users to access secret information, in real time, by sending a single message from the server, being the mentioned secret information retrieved by users from certain private information previously broadcast through a secure channel (using a standard encryption algorithm for this process previous process of private information broadcast) using the same device as the present invention.

The scenario for this scheme is as follows. We plan to secure communications within a restricted group. The pertinent elements of this scenario are as follows,

- A central server, which we refer to as key server, which controls the keys that allow secure communications.
- Users. They can join and leave the group at any time.

The device, acting as a key server in the Multicast environment, will perform a series of calculations and distribute the session key for the corresponding Unicast or Multicast group.

Thus, the key server will perform the necessary process to calculate three large prime numbers, called $g$, $m$ and $p$. In order to obtain $m$ and $p$, we use the formula

$$p = q * m + 1,$$

knowing besides that $m$ divides $p - 1$. Afterwards, we find $g_1$ as a generator of a ring of $p$ modular inverse of integers, knowing that $g$ will be from 1 to $p - 1$.

Therefore, we have the necessary process calculated by the key server, in this case, the device of the present invention.

An additional problem with respect to maintaining the privacy of the group happens when there is a new member or one of the members leaves for any reason.

In the first case, for the addition of a new member, the Multicast system must take into account that the member has to have a secret key and, therefore, the server will recalculate again the group key. This is done through an efficient process that will not harm the performance of communications.

In the event that a new member joins or leaves, there is the problem that we must ensure that the member cannot access the old session key or, respectively, the new key using the secret key they have.

We know that each user is assigned some previously distributed private information. This information is called $x_i$, being a large prime number. We define $\delta = k + m$ such that $\delta < x_i$ for all $x_i$.

The key server calculates $r = g^k \bmod p$ and $u = \delta^{-1} \bmod L$ with $L = \Pi x_i$ and sends the $u$ data to the group members.

Thus, each group member receives $u$ and calculates $u^{-1} \bmod x_i = \delta$ since

$$u^{-1} \bmod L = \delta \Leftrightarrow u\,\delta = 1 \bmod L \Leftrightarrow u\,\delta = 1 \bmod x_i$$

Thus we can conclude that we have a congruence system as follows:

$U\,\delta = 1 \bmod x_1$
$U\,\delta = \bmod x_2$
...
...
$u\,\delta = 1 \bmod x_n$

And we get a unique solution, since $\delta < x_i$ for all $x_i$.

Once $\delta$ is obtained, the user has to calculate $g^\delta \bmod p$ (with public $p$ and $g$).

Therefore, when a new user (which is an electronic device as the one mentioned herein)joins the group, then the system refresheswith a new $g^k \bmod p$ including the private information of the new user in the calculation of the module such as $L' = L * x_{i+1}$ where $x_{i+1}$ indicates the private information of the new user.

In contrast, if a user leaves the group, then $L$ is recalculated in the way shown below,

$$L' = \frac{L}{X_j}$$

Where $x_j$ indicates the private information of the user who leaves the group. And then it is refreshed with a recalculation of $g^k \bmod p$ for a new $k$ value.

Both $g$ and $p$ are public values that anyone can know. Similarly, $u$ is a value that is sent to the *medium.* However, for the formation of our protocol, retrieve the value $\delta$ that allows us access the session key, $g^k \bmod p$ requires to know one of the $x_i$ factors of the $L$ integer.

The algorithm shown above has authentication mechanisms for all the devices participating in the secure communication. Note that the authentication process, both in the Unicast and Multicast modes, does not use any digital signature mechanism, which avoids the use of public key cryptosystems as they require significant computational requirements both in time and resources which is not suitable for most microcontrollers such as PICs, Atmel, ARM architectures in general, etc. Thus, the method used by the device of this invention is especially interesting microcontrollers or microprocessors with limited resources where the use of these resources for other tasks with higher priority and where authentication is also required.

In any system of secure communications, group members must trust each other. This trust is generated from the calculations necessary to verify that the member from the other side is really who he claims to be. Therefore, in this section we will see how any member of the group is confident that the member sending the keys is the key server and on the other hand, how an individual can identify another.

For devices of the multicast group users to be satisfied that the device that is acting as an information and key server is really who he claims to be, the procedure is as follows. $a$ is a random number generated by the server device such that $a < x_i$ for all $i$ from 1 to $n$. The server calculates $s = (g^k)^{-1} \bmod L$ where $g^k$ is the distributed key and $L = \Pi x_i$. It also calculates $h(a)$ where $h$ is a secure hash function, for example, using SHA-2. When the server device sends the $u$ parameter, which is the refresh message and from which $g^k \bmod m$ is obtained, adds the *(s\*a, h(a))* information which will allow the target device to authenticate the origin of *u*.

Thus, when the destination device receives the message *(u, (s\*a, h(a)),* it calculates $r = g^k \bmod m$ using $x_i$ as seen above. s is also calculated using its private number $x_i$ and eventually gets h(a) comparing that h(a) with the one the key server sent. If both are equal, the authentication event succeeds.

If a user with the *i* device wants to authenticate the user with the group *j* device, the device makes use of the following protocol. The user *i*, who is a $x_i$ holder wants to authenticate the user *j*, who is a $x_j$ ticket holder. The following algorithm follows:

    1. The user *i* randomly chooses $t$ such as *1 < t < m* and sends it to the server.

    2. The server calculates *inv = t$^{-1}$ mod L* and returns it to the user *i*.

    3. The user *i* sends the user *j*, (inv, g$^{xi}$ mod m).

    4. The user *j* calculates

$$t_j = inv^{-1} \bmod x_j$$

$$\beta_j = t_j * (g_{xi})x_j \bmod m$$

sending the user $i$, the pair $(\beta_j, \beta_{xj})$.
5. The user $i$ calculates

$$\beta_i = t(g^{xj})^{xi} \bmod m = t*g^{xjxi} \bmod m$$

thus the $i$ user positively authenticates $j$ provided that

$$\beta_i = \beta_j$$

is fulfilled. Thus we have a real-time and server and user authentication mechanism secure encryption.

## DESCRIPTION OF THE DRAWINGS

Figure 1 shows the various components of the device.
Figure 2 shows a diagram of the overall system in a Unicast Internet communication.
Figure 3 shows a diagram of the overall system in a local network environment.
Figure 4 shows a diagram of the overall system in a Multicast communication.
Figure 5 shows a system configuration using two RJ45 connectors, an IPv4 address and a bridge mode configuration.
Figure 6 shows a system configuration using two different IPv4 addresses for two separate RJ45 connectors in a local area network (LAN) environment.
Figure 7 shows the interaction between the device and the external elements.
Figure 8 shows the use of the keyboard device + LCD for remote sensitive data input which will reach the encryption device.

## PREFERRED EMBODIMENT OF THE INVENTION

In view of the figures, a preferred method for realising the proposed invention is described below.

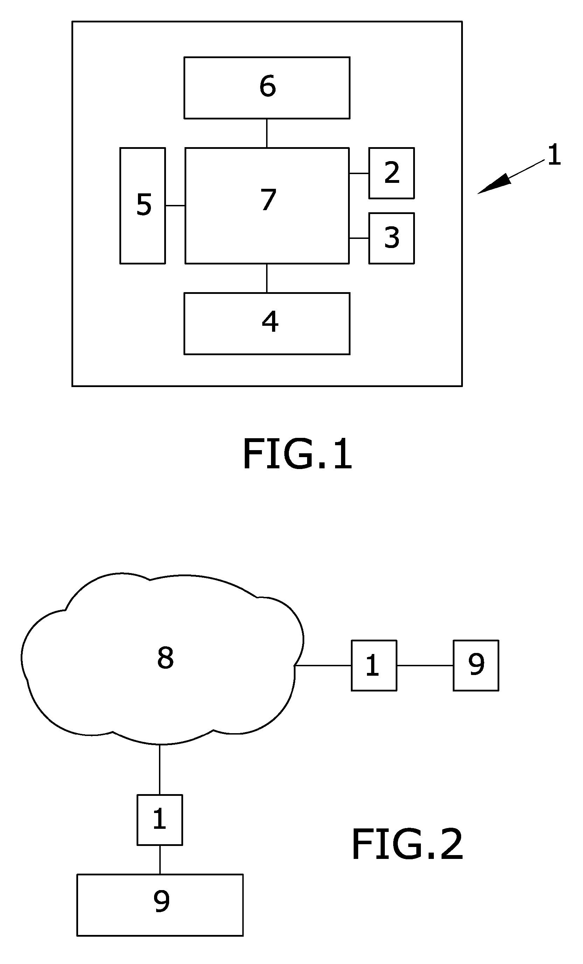

Figure 1 shows the various components that make up the symmetric encryption device (1) valid for Unicast and Multicast environments comprising:

- A central microprocessor (1).
- Two (2) and (3) RJ45 connectors.
- An anti-opening protection module (4).
- Some external communication ports (5), (Bluetooth, USB, RF).
- A 9V battery (6) that feeds the anti-opening and microprocessor system.

The anti-opening mechanism (4) locks the device (1) thereby disabling its use. For that purpose, it has a 9-volt battery (6) that powers the anti-opening system (4) at all times and is able to eliminate information contained in the microprocessor or even its destruction, as appropriate, as well as the encryption keys. The anti-opening mechanism is formed by a series of strategically placed IR diodes capable of detecting light changes compatible with the opening process, the signal being saturated in the case that the mentioned opening occurs. There is also an additional module with a motion and acceleration sensor to avoid removal of the device without prior permission. This module, after the aforementioned, can be disabled for a specific time via software. Not so the light detection mechanism. The device electronic board has four buttons which are activated by the metal housing. When being removed by unauthorized personnel, as soon as one of the buttons is open, it will be detected by the central microprocessor and the device will be made void.

In Figure 2 a diagram of the overall system is shown on a Unicast Internet communication which involves the use of the encryption device (1) in which one of the RJ45 connectors is used to connect to a computer (9), while the other RJ45 connector is used to connect to the data network either through intranet or directly to a router for Internet access (8).

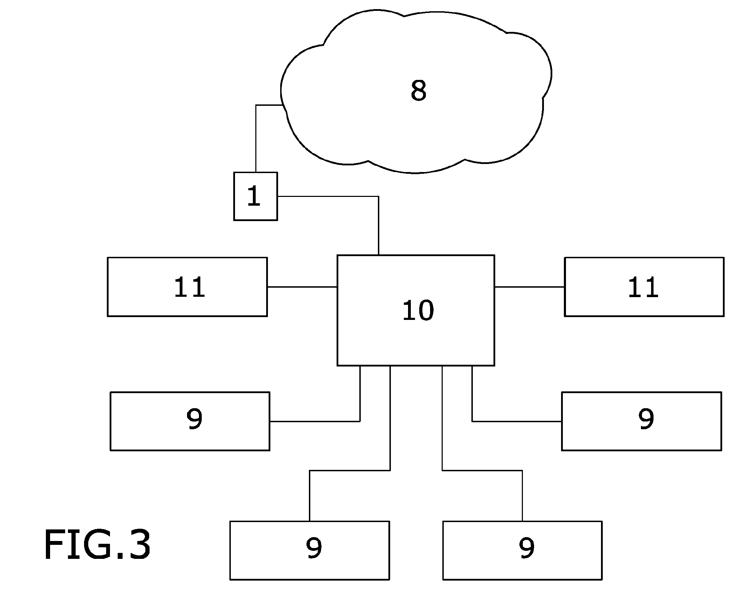

In Figure 3 a schematic of the overall system in a local network environment is shown, in which the encryption device (1) is connected on an Ethernet (10) hub or similar and a number of devices, such as mobile devices (11) and several computers (9), connecting to the data network, either Internet or Intranet (8) through the Ethernet (10) hub.

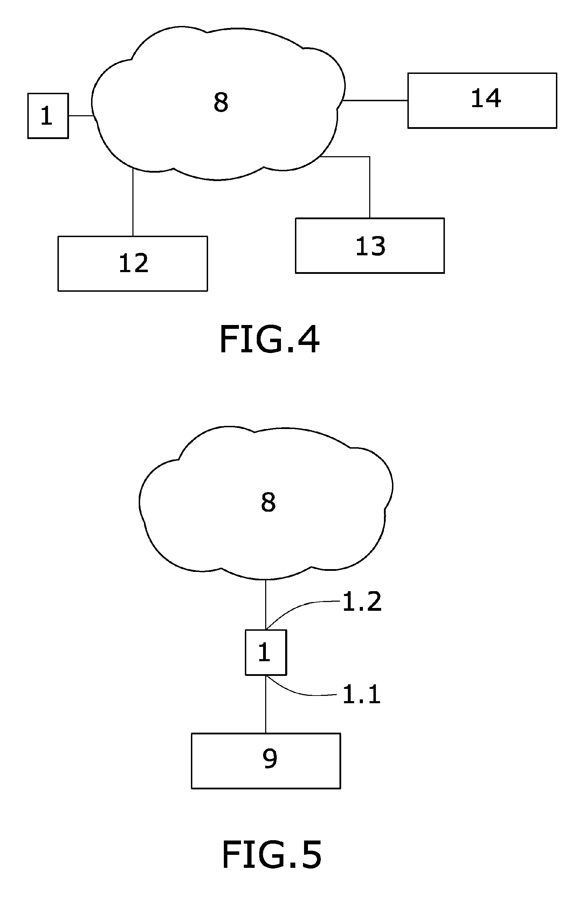

In Figure 4 a diagram of the overall system is shown in a Multicast communication, where on the data network or internet (8) several Multicast groups (11) (12) and (13) are connected, and an encryption device (1), which acts as a key server for each Multicast environment, and optionally as a Multicast environment information server.

In Figure 5, a system configuration is shown using two RJ45 connectors, an IPv4 address and bridge mode configuration, wherein a first RJ45 connector (1.1) of the encryption device (1.1) is connected to a computer (9), while the second RJ45 connector (1.2) of the encryption device (1.2) connects to the Internet (8).

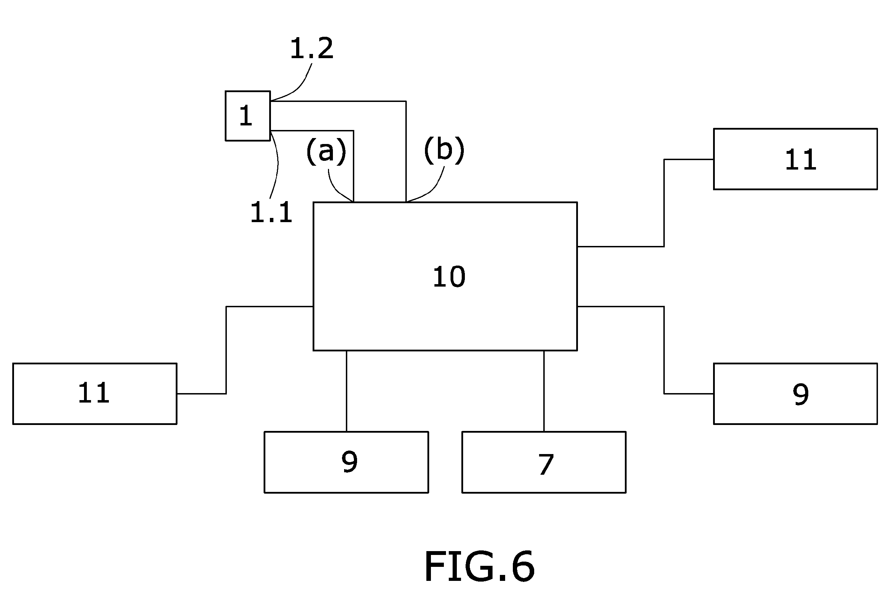

In Figure 6, a system configuration is shown using two different IPv4 addresses (a) and (b) for two separate RJ45 connectors in an local area network (LAN) environment where the encryption device (1) is connected to an Ethernet (10) hub or similar with two connections through two RJ45 connectors (1.1) and (1.2), a number of mobile devices (11) and various computers (9).

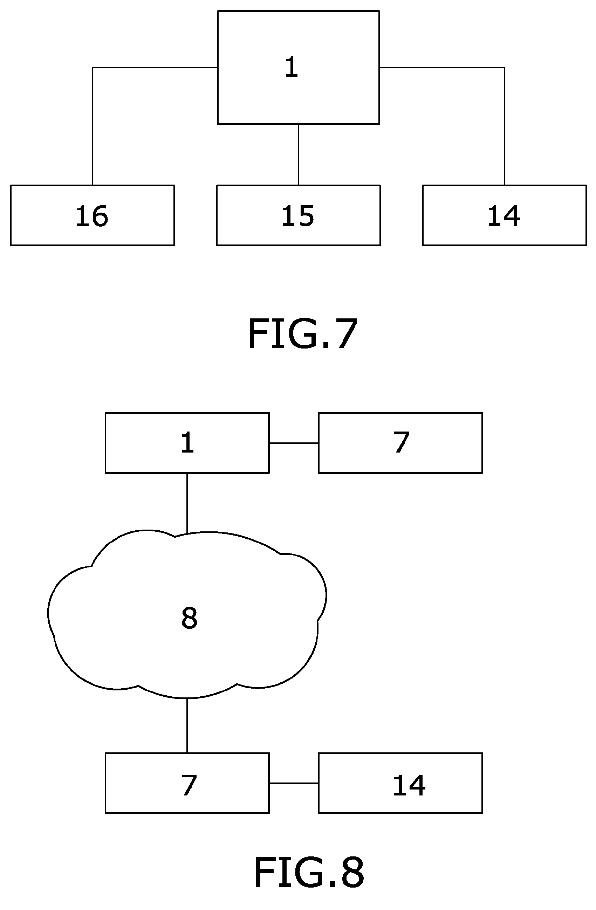

In Figure 7, the interaction between the device and external elements is shown, where a set (14) consisting of a keyboard and a screen can be connected on a encryption device (1), also a mobile device (15) and/or a generic radio frequency communication device.

Finally, in Figure 8 the use of keypad + LCD device (14) for remote input of sensitive data that will reach the encryption device (1) through an Internet environment (8) is shown.

## Claims

1. Symmetric encryption device that allows protecting the information between two extremes, either in Unicast mode, or between an unlimited group of users, Multicast mode, characterised because it comprises:

   - A central microprocessor (1).
   - Two RJ45 (2) and (3) connectors.
   - Anti-opening protection module (4) which can be disabled for a given time through a software, which allows you to delete information contained in the microprocessor or its destruction.
   - Some external communication ports (5), (Bluetooth, USB, RF).
   - A 9V battery (6) that feeds the anti-opening system and microprocessor.

2. . Symmetric encryption device according to claim 1, wherein the anti-opening protection module (4) comprises a metal shell having pins positioned to press switches placed in the electronic circuit of the device, these switches can detect a attempt of unauthorized opening; also contains infrared diodes that detect the opening of the device cover.

3. Symmetric encryption device according to claim 1, **characterised by** the anti-opening mechanism (4) also includes an additional module with a motion and acceleration sensor to avoid removal of the device without prior permission.

4. . Symmetrical encryption device according to claim 1, **characterized in that** it is used in combination with a keyboard device besides a screen (14) and/or a mobile device (15) and/or a connection device by radiofrequency or the like (16).

5. Encryption procedure with the device according to any of claims 1 to 4, in which the device acts as a key server in multicast environment, **characterized by** comprising the steps:

   - Calculate three large prime numbers, called $g$, $m$ and $p$ prime. To obtain m and p, we use the formula

$$p = q * m + 1,$$

   knowing besides that $m$ divides $p - 1$.

- Afterwards, we find $g_1$ as a generator of a ring of $p$ modular inverse of integers, knowing that $g$ will be from 1 to $p$ - 1.

**6.** Encryption procedure with the device according to any of claims 1 to 4, wherein to accept/dismiss a new user in a Multicast environment, is **characterized by** comprising the steps of:

- Private information is allocated to each user previously distributed through a secure channel. This information is called $x_i$, being a large prime number.
- A $\delta = k + m$ number is used so that $\delta < x_i$ for all $x_i$.
- The key server calculates $r = g^k \; mod \; p$ and $u = \delta^{-1} \; mod \; L$ with $L = \Pi x_i$ and sends the $u$ data to the group members. Thus, each group member receives $u$ and calculates $u^{-1} \; mod \; x_i = \delta$ since

$$u^{-1} \; mod \; L = \delta \Leftrightarrow u \; \delta = 1 \; mod \; L \Leftrightarrow u \; \delta = 1 \; mod \; x_i$$

Once $\delta$, is obtained, the user calculates $g^\delta \; mod \; p$ (with public $p$ and $g$).

Therefore, when a new user joins the group then the system refreshes with a new $g^k \; mod \; p$ including the private information of the new user in the calculation of $L$ so that in this recalculation we have $L' = L * x_{i+1}$ where $x_{i+1}$ indicates the private information of the new user.

**7.** . Encryption procedure with the device according to claim 6, in which to accept/dismiss a new user in a Multicast environment, is **characterized by** understanding that if a user leaves the group, then $L$ is recalculated in the way shown below,

$$L' = \frac{L}{X_j}$$

Wher e$x_j$ indicates the private information of the user who leaves the group. And then it is refreshed with a new calculation of $g^k \; mod \; p$ for a new $k$ value.

Where both $g$ and $p$ are public values that anyone can know. Similarly, $u$ is a value that is sent to the medium. However, by the construction of the protocol, $\delta$ recover value that allows us access to the session key, $g^k \; mod \; p$ required to meet one of the factors $x_i$ the integer $L$.

**8.** Encryption procedure with the device according to any of claims 1 to 4, in which to have the certainty that the key member sending the key server is **characterized by** comprising the following steps:

- $a$ is a random number generated by the server device such that a $< x_i$ for all $i$ from 1 to $n$.
- The server calculates s $= (g^k)^{-1} \; mod \; L$ where $g^k$ is the distributed key and $L = \Pi x_i$.
- Furthermore calculates $h(a)$ where $h$ is a secure hash function, for example, using SHA-2. When the server device sends the $u$ parameter, which is the refresh message and from which $g^k \; mod \; m,$ is obtained, adds the $(s*a, h(a))$ information which will allow the target device to authenticate the origin of $u.$

Thus, when the destination device receives the message $(u, (s*a, h(a)),$ it calculates $r = g^k \; mod \; m$ using $x_i$ as seen above.
Thus, once the target user (destination device) has obtained $r$ then he calculates

$$h(s*a*r \; mod \; x_i) = h(a \; mod \; x_i) = h(a)$$

Thus, the target user is certain that whoever sends the parameter *u*, to calculate s he must know *L* and therefore all $x_i$ being the only possibility therefore that it concerns the server device.

**9.** Encryption procedure with the device in any of claims 1 to 4, where if a user with the *i* device, wants to authenticate the user with the group *j* device we use the following protocol comprising the following steps:

User *i*, $x_i$ holder, wants to authenticate the user *j*, $x_j$ ticket holder. The following algorithm follows:

- The user *i* randomly choses *t* such that *1 < t < m* and sends it to the server.
- The server calculates *inv = t⁻¹ mod L* and returns it to the user *i*.
- The user *i* sends to the user *j*, (inv, $g^{xi}$ *mod m*).
- The user *j* calculates

$$t_j = inv^{-1} \bmod x_j$$

$$\beta_j = t_j * (g_{xi})x_j \bmod m$$

sending user *i*, the pair ($\beta_j, g_{xj}$).
- User *i* calculates

$$\beta_i = t(g^{xj})^{xi} \bmod m = t*g^{xjxi} \bmod m$$

thus the *i* user positively authenticates *j* provided that

$$\beta_i = \beta_j$$

**10.** Use of the encryption device according to any of claims 1 to 4, **characterized in that** it uses:

- In a Unicast communication in Internet.
- In a local network environment.
- In a Multicast communication.
- In a bridge mode configuration.
- Using two different IPv4 addresses for two separate RJ45 connectors in a LAN environment.

FIG.1

FIG.2

FIG.3

FIG.4

FIG.5

FIG.6

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2245305
- ES 2094135
- ES 2130570
- ES 2158081
- ES 2221932
- ES 2262210
- ES 2274557